# DEMANDE DE BREVET EUROPEEN

(11) **EP 3 029 532 A2**
(43) Date de publication de la demande: **08.06.2016**
(21) Numéro de dépôt: 15191614.5
(22) Date de dépôt: 27.10.2015
(51) Int. Cl.: G05B 15/02

(54) **SYSTÈME DE SIMULATION D'UNE INSTALLATION PRODUISANT OU CONSOMMANT UNE RESSOURCE**

(30) Priorité: 05.11.2014 FR 1460680
(71) Demandeur: COMMISSARIAT A L'ENERGIE ATOMIQUE ET AUX ENERGIES ALTERNATIVES, 75015 Paris (FR)
(72) Inventeur: BERSENEFF, Boris, 38000 GRENOBLE (FR)
(74) Mandataire: Gevers & Orès

(57) **Abrégé**

L'invention concerne un système de simulation de simulation en temps réel d'une installation, système comprenant :
- une unité de traitement (1) comportant des moyens de mémorisation mémorisant :
o des paramètres de modèle et de puissance d'au moins une source virtuelle de production d'une ressource,
o des paramètres de modèle et de puissance d'un système virtuel de stockage de cette ressource,

- des premiers moyens de mesure (2) reliés à l'unité de traitement et délivrant un premier signal représentatif d'au moins une grandeur physique caractéristique de ladite au moins une source virtuelle de production,
- des deuxièmes moyens de mesure (3) reliés à l'unité de traitement et délivrant un deuxième signal représentatif d'au moins une grandeur physique caractéristique de la consommation réelle de ladite ressource par ladite installation,

l'unité de traitement (1) délivrant :
- un troisième signal représentatif de la production de la ressource,
- un quatrième signal représentatif de la consommation de ladite ressource par ladite installation,
- un cinquième signal représentatif du dimensionnement optimisé de ladite installation calculé à partir à la fois des troisième et quatrième signaux et des caractéristiques du système virtuel de stockage.

## Description

La présente invention concerne le domaine technique de la surveillance, du dimensionnement et de la simulation en temps réel de la consommation et de la production d'une ressource et de son stockage local.

Le terme de ressource recouvre notamment les notions d'énergie, qu'il s'agisse d'électricité ou de chaleur, et de ressource naturelle telle que l'eau.

Il est déjà connu de contrôler une installation produisant ou consommant une ressource, au moyen de divers dispositifs de mesure.

Il est également connu de dimensionner une installation de production associée à un système de stockage, à partir de données correspondant à la consommation réelle et à la production. Cependant, ce dimensionnement est réalisé à partir de données recueillies précédemment, et donc réalisé a posteriori.

L'invention a pour objet de proposer un système de simulation d'une installation produisant et consommant une ressource, ce système permettant de simuler la production et le stockage de la ressource à partir de données virtuelles et réelles et de calculer la consommation de la ressource à partir de données mesurées, c'est-à-dire des données réelles, cette simulation étant réalisée en temps réel et non a posteriori. Ce système est également conçu pour simuler une consommation virtuelle supplémentaire de la ressource.

En pratique, cette installation comprend au moins une source virtuelle de production d'une ressource et un système virtuel de stockage de cette ressource.

Par ailleurs, cette installation consomme réellement cette ressource. De surcroît, le système permet de simuler une consommation additionnelle de cette ressource, par exemple liée à un appareil électrique supplémentaire.

Selon l'invention, ce système de simulation comprend :
- une unité de traitement comportant des moyens de mémorisation mémorisant :
   ∘ des paramètres de modèle et de puissance d'au moins une source virtuelle de production d'une ressource,
   ∘ des paramètres de modèle et de puissance d'un système virtuel de stockage de cette ressource,
- des premiers moyens de mesure reliés à l'unité de traitement et délivrant un premier signal représentatif d'au moins une grandeur physique caractéristique de ladite au moins une source virtuelle de production,
- des deuxièmes moyens de mesure reliés à l'unité de traitement et délivrant un deuxième signal représentatif d'au moins une grandeur physique caractéristique de la consommation réelle de ladite ressource par ladite installation,
   l'unité de traitement délivrant :
- un troisième signal représentatif de la production de la ressource,
- un quatrième signal représentatif de la consommation de ladite ressource par ladite installation,
- un cinquième signal représentatif du dimensionnement optimisé de ladite installation calculé à partir à la fois des troisième et quatrième signaux et des caractéristiques du système virtuel de stockage.

De préférence, ladite unité de traitement comporte :
- des premiers moyens de simulation reliés auxdits premiers moyens de mesure et délivrant ledit troisième signal représentatif de la production de la ressource, en fonction dudit premier signal et des paramètres de modèle et de puissance de la production de la source virtuelle de production préalablement définis,
- des premiers moyens de calcul reliés auxdits deuxièmes moyens de mesure et délivrant ledit quatrième signal représentatif de la consommation de ladite ressource par ladite installation,
   l'unité de traitement délivrant ledit cinquième signal représentatif du dimensionnement optimisé de ladite installation en fonction du troisième signal et du quatrième signal, et des paramètres de modèle et de puissance du système virtuel de stockage.

De préférence, l'unité de traitement comporte des moyens de mémorisation mémorisant des paramètres de modèle et de puissance d'au moins un dispositif virtuel de consommation d'une ressource, le cinquième signal représentatif du dimensionnement optimisé de ladite installation étant fonction du troisième signal et du quatrième signal, et des paramètres de modèle et de puissance du système virtuel de stockage et du dispositif virtuel de consommation.

De préférence, le système de simulation comprend des moyens de contrôle reliés à l'unité de traitement pour faire varier les paramètres fournis aux moyens de simulation.

Par ailleurs, ce système comprend avantageusement des moyens d'interface pour l'affichage des signaux de sortie de l'unité de calcul.

Ces moyens d'interface peuvent être prévus sur l'unité de traitement ou, au contraire, déportés.

Le système de simulation selon l'invention peut également comprendre un dispositif de contrôle comprenant des moyens d'alarme, activés lorsque la consommation en ressource de l'installation est supérieure à la quantité de ladite ressource produite et stockée.

De préférence, le dispositif de contrôle comprend des moyens de coupure de l'alimentation en ressource réelle de ladite installation, activés par les moyens d'alarme.

L'invention sera mieux comprise et d'autres buts, avantages et caractéristiques de celle-ci apparaitront plus clairement à la lecture de la description qui suit et qui est faite aux regards des dessins annexés sur lesquels :
- La figure 1 représente schématiquement le système de simulation et le système de contrôle selon l'invention, lorsque la ressource est de l'énergie électrique, et
- La figure 2 illustre, de façon schématique, les entrées/sorties du système de simulation selon l'invention.

Les éléments communs aux différentes figures seront désignés par les mêmes références.

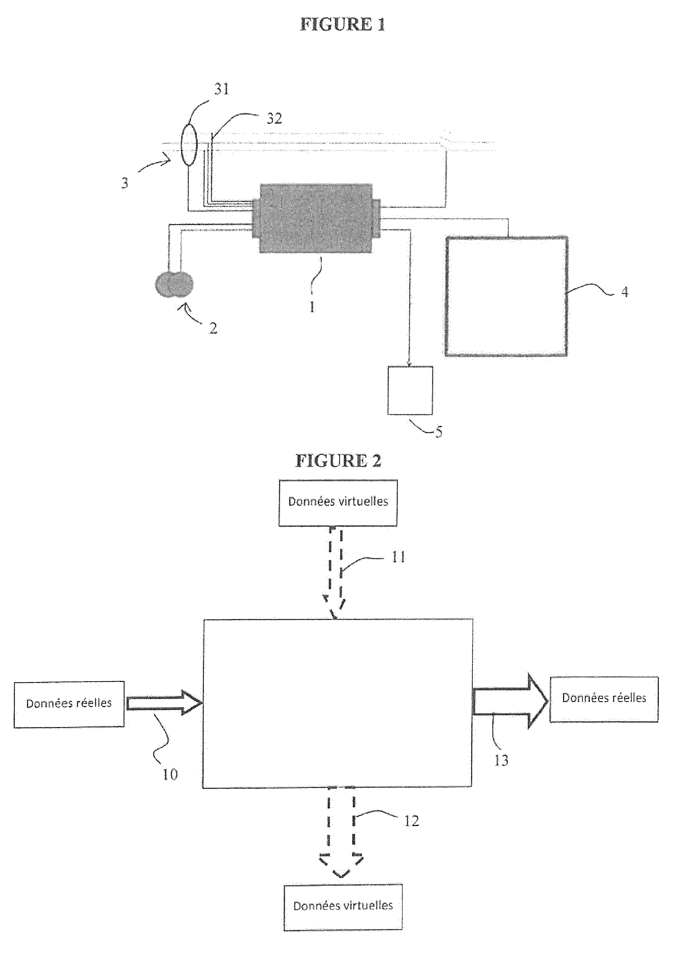

Sur la figure 1, le système de simulation selon l'invention comprend une unité de traitement désignée par la référence 1.

L'unité de traitement comporte des moyens de mémorisation dans lesquels sont stockés d'une part :
- des paramètres de modèle et de puissance d'au moins une source virtuelle de production d'une ressource,
- des paramètres de modèle et de puissance d'un système virtuel de stockage de cette ressource.

A titre d'exemple, si la ressource est de l'électricité, la source virtuelle de production peut être un dispositif photovoltaïque. Ledit dispositif comporte alors des paramètres de modèle et de puissance préalablement définis et enregistrés dans l'unité de calcul. Ces paramètres de modèle et de puissance peuvent être par exemple une surface de panneaux photovoltaïques, une inclinaison ou une orientation (azimut).

En outre, selon ce mode de réalisation, le système virtuel de stockage peut être alors une batterie. Les paramètres de modèle et de puissance du système virtuel de stockage sont alors une tension exprimée en volts (V), une capacité exprimée en Ampère-heure (Ah).

Cette unité de traitement est reliée à des premiers moyens de mesure 2 qui permettent de mesurer au moins une grandeur physique caractéristique d'une source virtuelle de production d'une ressource qui fait l'objet d'une simulation.

A titre d'exemple, cette ressource est de l'énergie électrique générée à partir de l'énergie solaire. Ces premiers moyens de mesure 2 consistent par exemple en des capteurs d'une grandeur physique, comme la température ou l'irradiation solaire.

Ces mesures de température ou d'irradiation solaire sont des grandeurs physiques réelles permettant de quantifier la quantité d'électricité virtuelle produite par un dispositif photovoltaïque virtuel.

Autrement dit, lorsque la ressource est de l électricité produite à partir de panneaux solaires virtuels de technologie et de surface déterminée et dont l'orientation et l'inclinaison sont connues, on peut définir une quantité virtuelle d'énergie électrique produite, à partir de l'ensoleillement réel mesuré par le capteur.

Si cette ressource est de l'énergie électrique générée à partir du vent, les premiers moyens de mesure 2 peuvent consister notamment en un capteur de la vitesse du vent. Ces mesures de vitesse du vent sont des grandeurs physiques réelles permettant de quantifier la quantité d'électricité virtuelle produite par un dispositif éolien virtuel. Ce dispositif éolien, tel qu'une éolienne comporte des paramètres de modèle et de puissance préalablement définis et enregistrés dans l'unité de calcul. Les paramètres de modèle et de puissance d'une éolienne peuvent être par exemple sa puissance nominale, le diamètre de son rotor et la hauteur de son mât.

Les premiers moyens de mesure 2 délivrent donc un premier signal réel représentatif d'au moins une grandeur physique permettant de quantifier la quantité virtuelle de ressource produite par la source virtuelle de production. Cette grandeur physique va pouvoir permettre de déterminer la quantité de ressource virtuellement générée par la source de production virtuelle qui est définie de manière théorique, notamment à partir des paramètres de modèle et de puissance.

Bien entendu, plusieurs sources de production virtuelles peuvent être utilisées. Dans ce cas, les moyens de mesure sont adaptés pour mesurer au moins une grandeur physique caractéristique de chaque source de production.

A titre d'exemple, si la ressource est de l'électricité, une première source virtuelle de production peut être un dispositif photovoltaïque et une deuxième source virtuelle de production peut être un dispositif éolien. Les moyens de mémorisation de l'unité de traitement 1 comportent alors des paramètres de modèle et de puissance des deux dispositifs photovoltaïque et éolien.

On peut également envisager d'utiliser une ou plusieurs source(s) de production virtuelle(s) de la ressource associée(s) à une source réelle de production de la ressource.

L'unité de traitement 1 est également reliée à des deuxièmes moyens de mesure 3, reliés à l'installation.

Ils consistent ici en au moins en une sonde 31 de courant et au moins une sonde 32 de tension, destinées à mesurer en temps réel la tension et le courant réel consommé par l'installation.

Les deuxièmes moyens de mesure 3 délivrent donc un deuxième signal représentatif de la consommation réelle de la ressource par l'installation.

Ainsi, l'unité de traitement comprend des premiers moyens de simulation qui reçoivent le premier signal délivré par les premiers moyens de mesure 2. L'unité de traitement simule alors la production de la ressource, en fonction de ce premier signal et des paramètres de modèle et de puissance de la source de production virtuelle précédemment paramétrée en tenant compte par exemple de la puissance maximale, de la relation entre la grandeur physique mesurée et la puissance fournie ou encore le rendement.

L'unité de traitement peut donc délivrer un troisième signal représentatif de la production de la ressource, par exemple l'énergie électrique produite à partir de l'énergie solaire.

Par ailleurs, l'unité de traitement 1 comprend des premiers moyens de calcul qui reçoivent en entrée le deuxième signal provenant des deuxièmes moyens de mesure 3 et peut calculer la quantité réelle de ressource consommée par l'installation. L'unité de traitement délivre donc, grâce à ces premiers moyens de calcul, un quatrième signal représentatif de la consommation réelle de la ressource par l'installation.

Dans l'exemple décrit, l'unité de traitement va donc calculer la puissance réelle consommée et virtuellement produite par l'installation.

Au cours du fonctionnement de l'installation, ayant en mémoire les paramètres de modèle et de puissance du système virtuel de stockage, l'unité de traitement est apte à gérer ledit système selon au moins deux modes :
- soit en tant que moyen de stockage de la ressource produite par la source virtuelle de production,
- soit aussi en tant que moyen supplémentaire de production.

En effet, si le ratio entre la production virtuelle de ressource et la consommation réelle est supérieur à 1 alors la ressource excédentaire générée pourra être stockée dans les moyens de stockage virtuels. Si le ratio entre la production virtuelle de ressource et la consommation réelle est inférieur à 1 alors, afin que l'installation puisse continuer à fonctionner, malgré le manque de ressource générée par la source virtuelle de production, le système virtuel de stockage pourra restituer de la ressource préalablement stockée et devenir ainsi un moyen supplémentaire de production.

A titre d'exemple, si la ressource est de l'électricité, la batterie (système virtuel de stockage) pourra stocker de l'électricité lorsque les panneaux photovoltaïques (système virtuel de production) produisent un maximum d'énergie en pleine journée et pourra restituer cette énergie électrique stockée lorsque les panneaux ne produisent plus assez d'énergie (période de nuit ou de mauvaises conditions météorologiques).

A partir du troisième signal et du quatrième signal, l'unité de traitement va pourvoir déterminer si les dimensionnements de la source virtuelle de production et de la source virtuelle de stockage sont acceptables. En d'autres termes, l'unité de traitement détermine si l'installation peut potentiellement fonctionner avec une source de production réelle reprenant les paramètres de modèle et de puissance des sources virtuelles de production et de stockage telles que définis dans l'unité de traitement 1.

L'unité de traitement peut ainsi délivrer un cinquième signal représentatif du dimensionnement optimisé de fonctionnement de l'installation. Le signal représentatif du dimensionnement est calculé à partir à la fois des troisième et quatrième signaux et aussi des caractéristiques du système virtuel de stockage.

Ainsi, l'unité de traitement permet de déterminer le dimensionnement de la source de production, sur la base de la consommation réelle de l'installation, mais sans qu'il soit nécessaire de réaliser au préalable la source de production, par exemple par la mise en place de panneaux solaires.

Ainsi, le système de simulation selon l'invention permet de dimensionner la source de production de l'installation et le système de stockage. A titre d'exemple, le système de simulation peut aider à déterminer la surface de panneaux photovoltaïques nécessaire à une installation donnée, compte tenu de la consommation de cette installation et des conditions météorologiques et notamment d'ensoleillement.

A cet égard, il convient de noter que les premiers et deuxièmes moyens de mesure 2 et 3 peuvent fonctionner en continu ou de manière périodique.

Par ailleurs, les données recueillies par les premiers moyens de mesure en temps réel, peuvent être complétées par des données reconstruites notamment à partir de bases de données des organismes météorologiques, par exemple des prévisions, ou encore de données satellites relatives par exemple à l'ensoleillement. Il ne s'agit donc pas de mesures réelles mais de données que l'on peut qualifier de virtuelles.

Selon un premier mode particulier de réalisation du système de simulation, les moyens de mémorisation de l'unité de traitement comportent des paramètres de modèle et de puissance d'au moins un dispositif virtuel de consommation d'une ressource.

En effet, il peut s'avérer utile de simuler la consommation en ressource d'un dispositif qui serait susceptible d'être intégré dans l'installation.

Selon cet exemple, si la ressource est de l'électricité, le dispositif virtuel de consommation peut être un appareil électroménager.

Ledit dispositif comporte alors des paramètres de modèle et de puissance préalablement définis et enregistrés dans l'unité de calcul. Ces paramètres de modèle et de puissance peuvent être par exemple une consommation exprimée en Ampère-heure (Ah), des plages horaires d'utilisation.

Ainsi, si l'installation est du type domestique, l'utilisateur peut souhaiter intégrer la valeur de la consommation d'un appareil ménager virtuel pour, par exemple, déterminer si son utilisation est compatible avec son installation ou s'il convient de modifier les sources de production et/ou de stockage.

Ainsi, selon ce premier mode particulier de réalisation du système de simulation, à partir du troisième signal et du quatrième signal et des paramètres de modèle et de puissance d'un dispositif virtuel de consommation, l'unité de traitement va pourvoir déterminer si les dimensionnements de la source virtuelle de production et de la source virtuelle de stockage sont acceptables.

Autrement dit, l'unité de traitement va déterminer si l'installation peut potentiellement fonctionner avec une source de production réelle reprenant les paramètres de modèle et de puissance des sources virtuelles de production et de stockage telles que définis dans l'unité de traitement 1.

L'unité de traitement peut ainsi délivrer un cinquième signal représentatif du dimensionnement optimisé de fonctionnement de l'installation. Le signal représentatif du dimensionnement est calculé à partir à la fois des troisième et quatrième signaux, des caractéristiques du système virtuel de stockage et des caractéristiques du dispositif virtuel de consommation.

La figure 1 montre que l'unité de traitement 1 est également reliée à un système de contrôle 4.

La communication entre l'unité de traitement 1 et le système de contrôle 4 peut être réalisée aux moyens d'un protocole de communication filaire et/ou sans fil (par exemple du type wifi, bluetooth ou ZigBee).

Les différents paramètres utilisés par l'unité de traitement peuvent notamment lui être communiqués par l'intermédiaire de ce système de contrôle 4. Ceci permet à l'utilisateur du système de simulation d'agir directement sur la définition de ces paramètres.

Par exemple, sur une période de test/simulation, si la production virtuelle est globalement en dessous de la consommation réelle, le système de simulation selon l'invention peut proposer à l'utilisateur de re-paramétrer les paramètres de modèle et de puissance de la source de production et/ou du système de stockage.

Le dispositif de contrôle 4 comporte également des moyens de coupure de l'alimentation en ressource de l'installation. Lorsque la consommation réelle et/virtuelle en ressource de l'installation est supérieure à la quantité de la ressource virtuelle produite et stockée, le dispositif de contrôle 4 peut couper l'alimentation réelle en ressource de l'installation.

Le dispositif selon l'invention compare donc des données calculées ou virtuelles avec des données réelles. Ainsi, ces moyens de coupure permettent de simuler une pénurie en ressource, compte tenu de sa consommation, de sa production et de son stockage par l'installation.

Ils permettent de sensibiliser les utilisateurs à leur consommation et à leur capacité à être autonomes en termes d'énergie par exemple.

Un système d'alarme peut également être prévu au niveau des moyens d'interface 5 ou du système de contrôle 4 pour avertir l'utilisateur lorsque sa consommation dépasse l'énergie produite et/ou stockée par l'installation.

La figure 2 illustre schématiquement les différents signaux en entrée et en sortie de l'unité de traitement 1.

Ils sont regroupés de façon à faire apparaître les signaux correspondant à des données réelles ou mesurées en temps réel et ceux correspondant à des données virtuelles, c'est-à-dire des données précédemment enregistrées ou théoriques ou encore des données simulées.

Ainsi, la figure 2 montre l'unité de traitement 1.

Cette dernière reçoit en entrée (flèche en traits pleins 10) des données réelles telles que la mesure de l'ensoleillement ou de la force du vent (réalisée par les premiers moyens de mesure 2) ou la mesure de la consommation électrique (réalisée par les deuxièmes moyens de mesure 3).

L'unité de traitement reçoit également en entrée (flèche en traits pointillés 11) des données virtuelles, c'est-à-dire des données non mesurées en temps réel. Il peut s'agir, par exemple, de données satellites liées à l'ensoleillement, de données virtuelles sur la capacité d'une batterie utilisable dans cette installation ou encore de données virtuelles sur la capacité de production des modules photovoltaïques hypothétiquement installés dans la source de production virtuelle. Il peut également s'agir de données représentatives d'un éventuel dispositif complémentaire susceptible d'accroître la consommation en ressource par l'installation.

Par ailleurs, l'unité de traitement délivre en sortie (flèche en traits pointillés 12) des données virtuelles ou simulées, par exemple la prévision de la production d'une ressource, telle que l'énergie électrique.

Elle délivre également en sortie (flèche en traits pleins 13) une donnée réelle, par exemple un ordre de coupure du réseau électrique (généré par le dispositif de contrôle 4).

La figure 1 illustre également des moyens d'interface 5 pour l'affichage des signaux de sortie de l'unité de calcul.

Ces moyens d'interface peuvent être déportés, comme illustrés sur la figure 5 ou prévus sur l'unité de traitement 1.

Par ailleurs, les moyens d'interface 5 permettent à l'utilisateur de visualiser en temps réel le niveau de production et de stockage de l'installation et donc d'ajuster en conséquence sa consommation.

Dans la description qui précède, la ressource considérée est de l'énergie électrique. Cependant, l'invention n'est pas limitée à cet exemple. Ainsi, le système de simulation selon l'invention pourrait également être appliqué à une ressource telle que de l'eau. Dans ce cas, les premiers moyens de mesure pourraient par exemple consister en un pluviomètre. Cette ressource pourrait également consister en de la chaleur.

Ainsi, le système de simulation selon l'invention permet de dimensionner les différents composants d'une installation en se basant sur des données réelles, tant en ce qui concerne la production de la ressource que sa consommation par l'installation.

Ces dimensionnements permettent donc d'ajuster de façon précise cette installation, en évitant par exemple de la surdimensionner inutilement.

Ce système permet également des expérimentations in-situ de composants particuliers, notamment de modèles de batteries ou de systèmes photovoltaïques.

Il permet également de déterminer comment la source de production peut être redéfinie, si la consommation et/ou la production de ressource se modifie au cours du temps.

Il permet également de réalisation des prévisions concernant des dispositifs complémentaires pour déterminer d'éventuelles modifications de la production de la ressource ou des plages horaires pendant lesquelles ces dispositifs pourraient être utilisés sans que des modifications de la production de la ressource soient nécessaires.

Les signes de référence insérés après les caractéristiques techniques figurant dans les revendications ont pour seul but de faciliter la compréhension de ces dernières et ne sauraient en limiter la portée.

## Revendications

1. Système de simulation en temps réel d'une installation, système comprenant :
- une unité de traitement (1) comportant des moyens de mémorisation mémorisant :
∘ des paramètres de modèle et de puissance d'au moins une source virtuelle de production d'une ressource,
∘ des paramètres de modèle et de puissance d'un système virtuel de stockage de cette ressource,
- des premiers moyens de mesure (2) reliés à l'unité de traitement et délivrant un premier signal représentatif d'au moins une grandeur physique caractéristique de ladite au moins une source virtuelle de production,
- des deuxièmes moyens de mesure (3) reliés à l'unité de traitement et délivrant un deuxième signal représentatif d'au moins une grandeur physique caractéristique de la consommation réelle de ladite ressource par ladite installation,
l'unité de traitement (1) délivrant :
- un troisième signal représentatif de la production de la ressource,
- un quatrième signal représentatif de la consommation de ladite ressource par ladite installation,
- un cinquième signal représentatif du dimensionnement optimisé de ladite installation calculé à partir à la fois des troisième et quatrième signaux et des caractéristiques du système virtuel de stockage.

2. Système de simulation selon la revendication 1, dans lequel ladite unité de traitement (1) comporte :
- des premiers moyens de simulation reliés auxdits premiers moyens de mesure et délivrant ledit troisième signal représentatif de la production de la ressource, en fonction du dit premier signal et des paramètres de modèle et de puissance de la source virtuelle de production de ressource préalablement définis,
- des premiers moyens de calcul reliés auxdits deuxièmes moyens de mesure et délivrant ledit quatrième signal représentatif de la consommation de ladite ressource par ladite installation,
l'unité de traitement délivrant ledit cinquième signal représentatif du dimensionnement optimisé de ladite installation en fonction du troisième signal et du quatrième signal, et des paramètres de modèle et de puissance du système virtuel de stockage.

3. Système de simulation selon l'une des revendications 1 ou 2, **caractérisé en ce que** l'unité de traitement (1) comporte des moyens de mémorisation mémorisant des paramètres de modèle et de puissance d'au moins un dispositif virtuel de consommation d'une ressource, le cinquième signal représentatif du dimensionnement optimisé de ladite installation étant fonction du troisième signal et du quatrième signal, et des paramètres de modèle et de puissance du système virtuel de stockage et du dispositif virtuel de consommation.

4. Système de simulation selon l'une des revendications 1 à 5, comprenant des moyens de contrôle (4) reliés à l'unité de traitement (1) pour faire varier les paramètres fournis aux moyens de simulation.

5. Système de simulation selon l'une des revendications 1 à 6, comprenant des moyens d'interface (5) pour l'affichage des signaux de sortie de l'unité de calcul.

6. Système de simulation selon la revendication 7, dans lequel ces moyens d'interface (5) peuvent être prévus sur l'unité de traitement ou déportés.

7. Système de simulation selon l'une des revendications précédente, **caractérisé en ce qu'**il comprend un système de contrôle comprenant des moyens d'alarme, activés lorsque la consommation en ressource de l'installation est supérieure à la quantité de ladite ressource produite et stockée.

8. Système de simulation selon la revendication précédente, dans lequel le dispositif de contrôle comprend des moyens de coupure de l'alimentation en ressource réelle de ladite installation, activés par lesdits moyens d'alarme.
